# FASCICULE DE BREVET EUROPEEN

(11) **EP 3 104 986 B1**
(45) Date de publication et mention de la délivrance du brevet: **11.04.2018**
(21) Numéro de dépôt: 15709750.2
(22) Date de dépôt: 12.02.2015
(51) Int. Cl.: B09B 3/00, B02C 19/00, B02C 18/22

(54) **MACHINE DE TRAITEMENT DE DÉCHETS INFECTIEUX, NOTAMMENT MÉDICAUX**
MASCHINE ZUR BEHANDLUNG VON INFEKTIÖSEM ABFALL, INSBESONDERE MEDIZINISCHEM ABFALL
MACHINE FOR TREATING INFECTIOUS WASTE, IN PARTICULAR MEDICAL WASTE

(30) Priorité: 14.02.2014 FR 1451172
(43) Date de publication de la demande: 21.12.2016
(73) Titulaire: Tesalys, 69393 Lyon Cedex 03 (FR)
(72) Inventeur: HENGL, Patrick, F-31450 Issus (FR); HENGL, Emmanuel, F-31560 Calmont (FR)
(74) Mandataire: Jeannet, Olivier
(86) Numéro de dépôt international: PCT/IB2015/051056
(87) Numéro de publication internationale: WO 2015/121823

(56) Documents cités:
- US-A- 3 774 852
- US-A- 5 054 696
- US-A- 5 150 843
- WiSEED: "TESALYS - Startup en vote sur WiSEED avec MIDINVEST", , 13 novembre 2013 (2013-11-13), XP054975546, Extrait de l'Internet: URL:http://www.youtube.com/watch?v=jwMvNWz czek&feature=player_detailpage [extrait le 2014-10-13]

## Description

La présente invention concerne une machine de traitement de déchets infectieux, notamment médicaux.

Il est imposé par la législation de broyer les déchets infectieux, notamment médicaux, de manière à ce qu'ils ne soient ni reconnaissables ni réutilisables, et surtout qu'ils puissent être intimement stérilisés. A cet effet, il est connu d'utiliser une machine de broyage et de stérilisation de tels déchets, comprenant une trémie supérieure de réception des déchets, un compartiment médian de broyage, et une cuve inférieure de réception, stérilisation et évacuation des déchets broyés.

Le compartiment médian de broyage inclut un broyeur formé de séries parallèles de couteaux contrarotatifs, les couteaux d'une série étant alternés avec des contre-couteaux. Les couteaux d'une série coopèrent avec les contre-couteaux d'une autre série, adjacente, et réciproquement.

Les déchets ayant tendance à ne pas être captés par les couteaux du broyeur et à rester dans la trémie, il a notamment été conçu d'équiper la trémie d'une gaine souple de réception et enrobage des déchets, défilant avec les déchets vers le broyeur et destinée à être broyée avec les déchets ; il a aussi été conçu d'équiper la trémie d'un manche orientable de poussée des déchets en direction du broyeur.

Le compartiment médian de broyage et la cuve inférieure doivent, entre chaque cycle de traitement de déchets, être stérilisés à la vapeur sous pression, ce qui implique de fermer de manière étanche l'ouverture existant entre le fond de la trémie et le compartiment médian de broyage. Cette fermeture est réalisée au moyen d'une trappe coulissante.

Les machines existantes, de ce type, donnent globalement satisfaction mais sont néanmoins perfectibles.

En effet, les manches orientables précités ne sont pas toujours très efficaces et impliquent la présence d'un opérateur. La trappe coulissante risque de piéger des déchets entre elle et son siège de coulissement lors de sa fermeture, ce qui conduit à un risque de fermeture non complète de cette trappe et à l'exercice d'efforts supplémentaires et répétés, non souhaitables, sur les moyens d'actionnement de la trappe. De plus, des fragments de déchets ont tendance à remonter plus ou moins du broyeur et à venir s'accumuler dans ledit siège, impliquant par conséquent un nettoyage fréquent de ce siège. En outre, la trappe coulissante rend nécessaire de prévoir des moyens de désinfection de la trémie qui sont distincts des moyens de désinfection et stérilisation du compartiment médian de broyage et du réceptacle inférieur, ce qui complexifie également la structure et le fonctionnement de l'appareil.

La présente invention a pour objectif principal de remédier à l'ensemble de ces inconvénients.

Les documents US 5,054,696 A, US 5,150,843 A et US 3,774,852 A décrivent diverses machines, ne permettant pas d'atteindre parfaitement cet objectif.

La machine concernée comprend, de manière connue en soi par le document US 5,054,696 A, un réceptacle de chargement des déchets, un ensemble de broyage de ces déchets, incluant un broyeur, et un moyen de poussée permettant de pousser les déchets en direction de ce broyeur ;
- le réceptacle de chargement des déchets présente une section transversale constante entre une ouverture de chargement des déchets et une ouverture de communication avec le broyeur ; et
- ledit moyen de poussée est une plaque mobile en translation dans le réceptacle de chargement des déchets, parallèlement à l'axe selon lequel ce réceptacle présente ladite section transversale constante, cette plaque ayant des dimensions telles qu'il existe seulement un interstice entre la tranche de la plaque et les parois délimitant ledit réceptacle de chargement des déchets ; la plaque est mobile entre une position de retrait, dans laquelle elle est apte à être dégagée de ladite ouverture de chargement des déchets, et une position de fin de course, dans laquelle elle est située aux abords de ladite ouverture de communication.
La vidéo "TESALYS - Startup en vote sur WiSEED avec MIDINVEST" publiée sur le site www.youtube.com le 13 novembre 2013 décrit une machine selon le préambule de la revendication 1. Selon l'invention, la machine comprend un joint d'étanchéité mobile entre une position rétractée, dans laquelle ce joint ne fait pas obstacle à la mobilité de la plaque dans le réceptacle de chargement des déchets, et une position d'étanchéité, dans laquelle ce joint réalise, dans ladite position de fin de course de la plaque, une étanchéité entre la plaque et les parois de ce réceptacle.

La plaque permet, par son déplacement, de pousser l'ensemble des déchets vers le compartiment de broyage, sans nécessité d'actionnement répété par un opérateur comme avec un manche selon la technique antérieure. L'interstice que forme cette plaque avec les parois du réceptacle élimine le risque que des déchets, ou des fragments de déchets remontant du broyeur, passent au-dessus d'elle. Dans ladite position de fin de course, il n'y a plus de risque que des fragments de déchets broyés se coincent entre la plaque et les parois du réceptacle, et la machine ne comprend aucun siège creux dans lequel de tels fragments sont susceptibles de s'accumuler.

De plus, le joint permet de séparer momentanément le réceptacle et le compartiment de broyage, pour la réalisation d'une désinfection et d'une stérilisation du compartiment de broyage à des conditions non requises pour ledit réceptacle. L'ensemble rend possible que le réceptacle de chargement des déchets soit désinfecté et stérilisé par les mêmes moyens de désinfection et de stérilisation que ceux réalisant la désinfection et la stérilisation du compartiment de broyage et, lorsque la machine en comprend une, de la cuve inférieure de réception, stérilisation et évacuation des déchets broyés.

Le joint d'étanchéité peut notamment être gonflable, de sorte que le passage de ce joint de ladite position rétractée à ladite position d'étanchéité se fasse par gonflage de ce joint et qu'inversement, le passage de ce joint de ladite position d'étanchéité à ladite position rétractée se fasse par dégonflage de ce joint.

Selon une possibilité, le joint d'étanchéité est logé dans un siège aménagé dans les parois délimitant le réceptacle de chargement des déchets. Dans ladite position d'étanchéité, ce joint vient alors s'appliquer sur la tranche de ladite plaque, cette tranche étant lisse.

Selon une autre possibilité, le joint d'étanchéité est logé dans un siège aménagé dans la tranche de ladite plaque et vient alors s'appliquer, dans ladite position d'étanchéité, sur les parois délimitant le réceptacle de chargement des déchets. Ces parois sont alors lisses, de sorte qu'aucun risque d'accumulation de fragments de déchets n'existe. Le joint peut, en position rétractée légèrement frotter contre les parois du réceptacle et former ainsi un moyen de raclage de ces parois.

La machine peut comprendre des moyens de blocage de la plaque dans ladite position de fin de course, notamment sous la forme d'au moins un verrou mettant en engagement la plaque et au moins une des parois délimitant ledit réceptacle de chargement des déchets.

Ces moyens de blocage immobilisent la plaque dans cette position fin de course et réduisent fortement, ou éliminent, l'exercice d'efforts d'usure sur le joint.

De préférence, dans ladite position de retrait, la plaque est entièrement logée dans un couvercle que comprend la machine, ce couvercle étant mobile entre une position de recouvrement de ladite ouverture de chargement des déchets, dans laquelle il clos cette ouverture, et une position d'effacement, dans laquelle il ne fait pas obstacle au chargement des déchets dans ledit réceptacle.

La plaque peut ainsi être totalement dégagée de cette ouverture, laquelle permet un chargement aisé des déchets.

De préférence, les moyens d'actionnement de la plaque comprennent au moins deux séries de ciseaux reliés les uns aux autres, sur deux côtés opposés de la plaque.

De tels ciseaux permettent de parfaitement guider la plaque entre ses positions précitées de retrait et de fin de course.

Selon un autre aspect,
- le broyeur est logé dans un tiroir mobile en coulissement à l'intérieur d'un compartiment de réception que comprend la structure de la machine, ce compartiment de réception étant délimité par des parois latérales et par une paroi postérieure, qui comprend une ouverture ;
- le tiroir présente un bossage distal apte, en position de complet engagement de ce tiroir dans ledit compartiment de réception, à être engagé de manière ajustée dans ladite ouverture que comprend ladite paroi postérieure ;
- la machine comprend un capot apte à envelopper la partie du bossage distal qui dépasse de ladite paroi postérieure en position de complet engagement du tiroir dans ledit compartiment de réception, ce capot étant pourvu d'une bride destinée à être boulonnée sur ladite paroi postérieure, cette bride présentant, au niveau de son bord interne, un surface biseautée, et
- la machine comprend un joint apte à être engagé de manière ajustée autour de ladite partie du bossage distal qui dépasse de ladite paroi postérieure en position de complet engagement du tiroir dans ledit compartiment de réception, jusqu'à être au contact de ladite paroi postérieure et à être écrasé par ladite surface biseautée du capot lorsque ce capot est boulonné à ladite paroi postérieure.

Le montage du broyeur dans la machine est ainsi réalisé en engageant le tiroir qui contient ce broyeur dans le compartiment de broyage, jusqu'à engagement ajusté dudit bossage distal au travers de ladite ouverture que comprend ladite paroi postérieure. Le joint est ensuite mis en place autour de ce bossage jusqu'à être en contact de cette paroi postérieure, puis le capot est mis en place sur le bossage et est boulonné à cette paroi postérieure de manière à réaliser l'écrasement du joint. Cet aspect consiste donc à prévoir deux structures autour du broyeur, ledit tiroir et ledit compartiment de réception, et à prévoir une liaison distale très résistante de ce tiroir à ce compartiment de réception, par écrasement dudit joint sur l'ensemble de sa périphérie. Cette liaison permet de créer une étanchéité entre l'intérieur et l'extérieur de la cuve. De plus, cette liaison permet de réaliser un blocage mécanique isostatique desdites deux structures, qui permet, si la géométrie du broyeur ou de la cuve n'était pas parfaite (ce qui peut arriver compte tenu du fait que certaines de ces pièces sont fabriquées par mécano soudure), de rattraper le jeu excessif qui existerait alors entre la partie postérieure du broyeur et ladite ouverture. Ce même blocage mécanique isostatique permet également de rattraper un défaut de perpendicularité ou de parallélisme entre la face d'appui contre le joint et ledit. En d'autres termes, le joint, lors de son écrasement, ne créera pas de contraintes sur le broyeur et se contentera de prendre place de manière plastique autour dudit bossage que comprend le broyeur.

Selon encore un autre aspect,
- le broyeur est formé d'au moins deux séries parallèles de couteaux contrarotatifs, les couteaux d'une série étant alternés avec des contre-couteaux de cette même série, et les couteaux d'une première série coopérant avec les contre-couteaux d'une autre série, adjacente, et réciproquement ; et
- au moins un couteau comprend au moins une alvéole débouchant dans au moins une de ses faces tournée vers le contre-couteau adjacent, ou au moins un contre-couteau comprend au moins une alvéole débouchant dans au moins une de ses faces tournée vers le couteau adjacent, cette alvéole étant destinée à être remplie de graisse de lubrification et à former ainsi une réserve de graisse.

Ainsi, lorsqu'une série de cycles de stérilisation et désinfection mettant en oeuvre un fluide chaud, en particulier de la vapeur d'eau, tend à réduire, voire à faire disparaître, la quantité de graisse présente dans l'interface entre un couteau et le contre-couteau adjacent, la rotation ultérieure du couteau par rapport au contre-couteau adjacent réalise un prélèvement de graisse dans cette alvéole du fait de la viscosité de cette graisse, et donc un rechargement de cette interface en graisse. Il en résulte que les interruptions de la machine pour recharger les interfaces des couteaux et contre-couteaux en graisse peuvent être nettement espacées.

Une telle alvéole peut déboucher dans une seule desdites faces d'un couteau ou d'un contre-couteau ; de préférence, toutefois, cette alvéole débouche dans les deux faces d'un couteau ou d'un contre-couteau.

De préférence, une alvéole est aménagée dans chaque contre-couteau et débouche dans les deux faces de ce contre-couteau.

Selon encore un autre aspect,
- le broyeur est formé d'au moins deux séries parallèles de couteaux contrarotatifs, les couteaux d'une série étant alternés avec des contre-couteaux de cette même série, et les couteaux d'une première série coopérant avec les contre-couteaux d'une autre série, adjacente, et réciproquement ; le bord de chaque contre-couteau tourné vers le couteau associé est en arc de cercle et des dents que comprend le couteau associé défilent le long de ce bord ; et
- au moins un contre-couteau présente une entaille aménagée en lui, débouchant dans ce même bord en arc de cercle, et située sur le côté aval de ce bord par rapport au sens de passage des déchets entre les séries de couteaux et contre-couteaux, cette entaille formant une pointe dirigée du côté amont du contre-couteau.

Cette pointe constitue une zone d'accrochage d'un fragment de déchet présent entre le couteau et le contre-couteau et permet de retenir ce fragment jusqu'au passage de la dent consécutive du couteau en regard de cette pointe, ce qui permet de réaliser un cisaillage ou un déchiquetage supplémentaire de ce fragment.

Lorsque l'ensemble des contre-couteaux que comprend le broyeur présente une telle entaille, et donc une telle pointe, le broyeur comprend non seulement une première zone de cisaillage au niveau des dents des couteaux et une deuxième zone de cisaillage entre les arêtes des dents des couteaux et les arêtes supérieures des contre-couteaux, mais également une troisième zone de cisaillage entre lesdites pointes et lesdites dents consécutives des couteaux mais aussi une quatrième zone active, constituée par la disposition alternée desdites pointes d'un contre-coteau à un contre-couteau adjacent. Ces pointes constituent des zones de calibrage sous la forme d'une sorte de peigne, qui permettent aux déchets broyés d'être de nouveau entrainés dans les zones de cisaillage citées précédemment pour peu que ces déchets aient des dimensions supérieures aux dimensions de la zone de passage initialement définie.

L'efficacité du broyage obtenu est ainsi grandement améliorée et permet d'éliminer toute nécessité d'un calibrage en aval du broyeur.

L'invention sera bien comprise, et d'autres caractéristiques et avantages de celle-ci apparaîtront, en référence au dessin schématique annexé, représentant, à titre d'exemple non limitatif, une forme de réalisation préférée de la machine concernée.

Dans ce dessin,
la figure 1 est une vue de cette machine de côté, en coupe longitudinale, une plaque de pression que comprend cette machine étant dans une position de retrait ;
la figure 2 est une vue de la machine similaire à la figure 1, ladite plaque de pression étant dans une position de fin de course d'abaissement ;
la figure 3 est une vue très agrandie de la portion de la machine située au niveau de cette position de fin de course, ladite plaque de pression n'étant pas dans cette même position ;
la figure 4 est une vue similaire à la figure 3, ladite plaque de pression étant dans ladite position de fin de course ;
la figure 5 est une vue en perspective d'un ensemble de broyage et d'une cuve inférieure de réception des déchets broyés, que comprend la machine ;
la figure 6 est une vue de cet ensemble de broyage en coupe transversale et à échelle agrandie ;
la figure 7 est une vue en éclaté de différents organes constituant le broyeur que comprend la machine ;
la figure 8 est une vue du compartiment de broyage similaire à la figure 6, en coupe longitudinale passant par l'un des arbres que comprend le broyeur ;
la figure 9 est une vue en section, de face, d'un couteau et d'un contre-couteau que comprend le broyeur ;
la figure 10 est une vue de la machine de côté, en coupe longitudinale, selon une variante de réalisation d'un joint d'étanchéité que comprend ladite plaque de pression, et
la figure 11 est une vue à échelle agrandie d'un détail apparaissant sur cette figure 10.

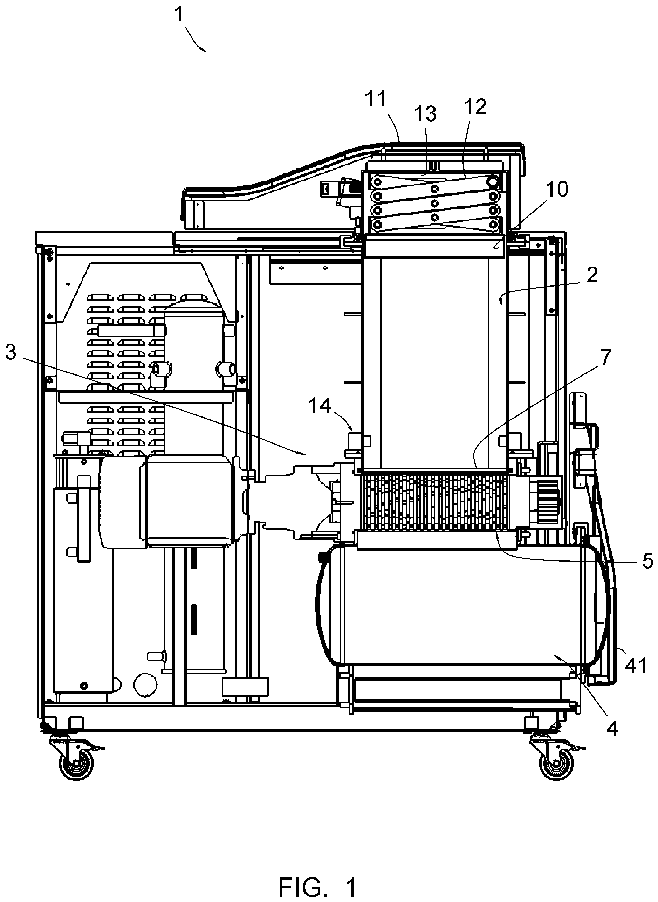

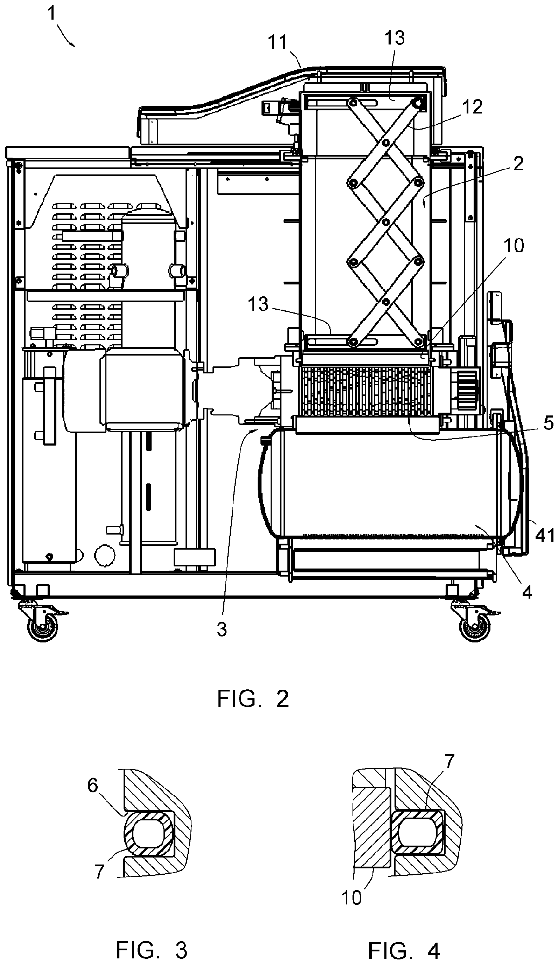

Les figures 1 et 2 représentent une machine 1 de traitement de déchets infectieux, notamment médicaux, comprenant essentiellement un réceptacle 2 de chargement des déchets, un ensemble 3 de broyage de ces déchets et une cuve inférieure 4 de réception, stérilisation et évacuation des déchets broyés. Les autres éléments visibles sur ces figures (armoire électrique, centrale de génération de vapeur, etc.) sont bien connus en eux-mêmes et ne font pas partie de l'invention ; ils ne seront donc pas particulièrement décrits.

Le réceptacle 2 présente une section transversale constante entre une ouverture supérieure de chargement des déchets et une ouverture inférieure de communication avec un compartiment de broyage, contenant un broyeur 5, que comprend l'ensemble de broyage 3.

Dans la version de la machine montrée sur les figures 1 à 4, le réceptacle 2 comprend, légèrement en retrait de cette ouverture inférieure, un siège en creux 6 (cf. figures 3 et 4) dans lequel est placé un joint gonflable 7. Ce joint 7, connu dans son principe, délimite une chambre intérieure fermée qui est reliée à une source de fluide sous pression (non représentée). L'alimentation de cette chambre par ce fluide permet de dilater le joint 7, le faisant passer d'une position rétractée, visible sur la figure 3, dans laquelle ce joint ne fait pas saillie du siège 6, et une position d'étanchéité, visible sur la figure 4, dans laquelle ce joint fait saillie du siège 6 et vient en application contre la tranche d'une plaque de pression 10, décrite plus loin, réalisant ainsi une étanchéité entre cette plaque 10 et les parois de ce réceptacle 2.

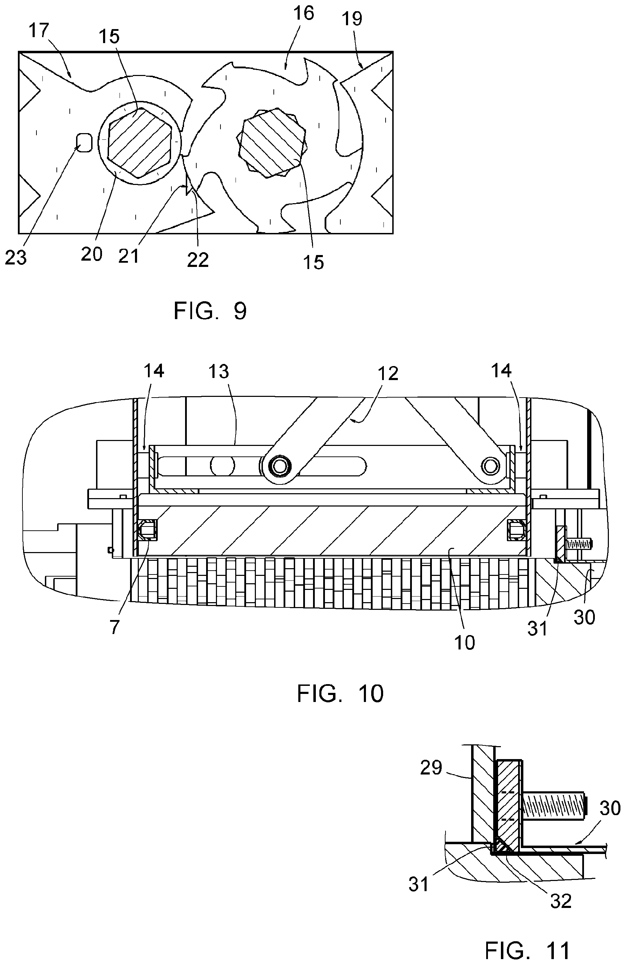

Dans la variante de réalisation de la machine 1 montrée sur la figure 10, le siège 6, contenant le joint 7, est aménagé dans la tranche de la plaque 10 et les portions des parois du réceptacle 2 situées légèrement en retrait de ladite ouverture inférieure sont lisses et dans la continuité du reste des parois du réceptacle 2.

En association au réceptacle 2, la machine comprend un ensemble de pression des déchets dans ce réceptacle, et un couvercle coulissant supérieur 11.

L'ensemble de pression des déchets comprend ladite plaque de pression 10, deux séries de croisillons 12 et des structures 13 de liaison de ces séries de croisillons 12 à la plaque 10, d'une part, et au couvercle 11, d'autre part.

Comme le montrent les figures 1, 2 et 10, la plaque de pression 10 a des dimensions telles qu'il existe seulement un interstice entre sa tranche et les parois délimitant le réceptacle 2. Cette plaque 10 est mobile en translation dans le réceptacle 2, au moyen du dépliage/repliage des croisillons 12, parallèlement à l'axe selon lequel ce réceptacle 2 présente ladite section transversale constante. Cette mobilité se fait entre une position supérieure de retrait, montrée sur la figure 1, dans laquelle elle est entièrement rétractée dans le couvercle 11, et une position inférieure de fin de course, montrée sur la figure 2, dans laquelle elle est située aux abords de ladite ouverture de communication, et dans laquelle le joint 7 est apte à réaliser l'étanchéité précitée.

Le couvercle 11 est creux intérieurement, de manière à loger la plaque 10, les séries de croisillons 12, lesdites structures de liaison 13 et un vérin d'actionnement des croisillons 12. Il est mobile en coulissement entre la position représentée, de recouvrement total de l'ouverture de chargement des déchets, dans laquelle il clos cette ouverture avec étanchéité, et une position latérale d'effacement, dans laquelle il libère entièrement ladite ouverture et ne fait donc pas obstacle au chargement des déchets dans le réceptacle 2.

Lesdites structures de liaison 13 sont formées de cadres faits de profilés en cornières ; les parois sur lesquelles sont montées les branches des croisillons 12 respectifs comprennent des lumières permettant que le point de pivotement d'une branche du croisillon 12 correspondant puisse se rapprocher et s'éloigner du point de pivotement de l'autre branche de ce même croisillon.

La machine 1 comprend également des verrous 14 montés sur deux parois en vis-à-vis du réceptacle 2, dont les pênes sont, dans ladite position inférieure de fin de course, reçus dans des gâches correspondantes aménagées dans les cadres formant lesdites structures de liaison 13.

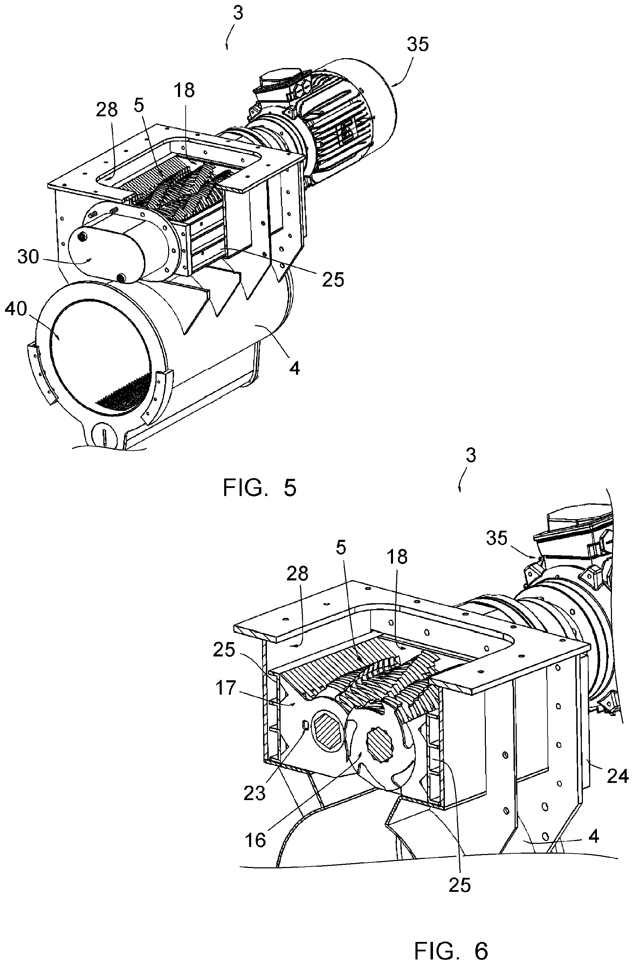

En référence aux figures 5 à 8, il apparaît que l'ensemble 3 de broyage des déchets comprend essentiellement le broyeur 5, formé de deux arbres 15 parallèles comportant chacun une série de couteaux 16 et de contre-couteaux 17 alternés, un compartiment de broyage 18 logeant ce broyeur 5, et un ensemble d'actionnement de ces arbres 15 de manière contrarotative.

Les couteaux 16 d'une série coopèrent avec les contre-couteaux 17 de l'autre autre série, et réciproquement, comme particulièrement visible sur la figure 9.

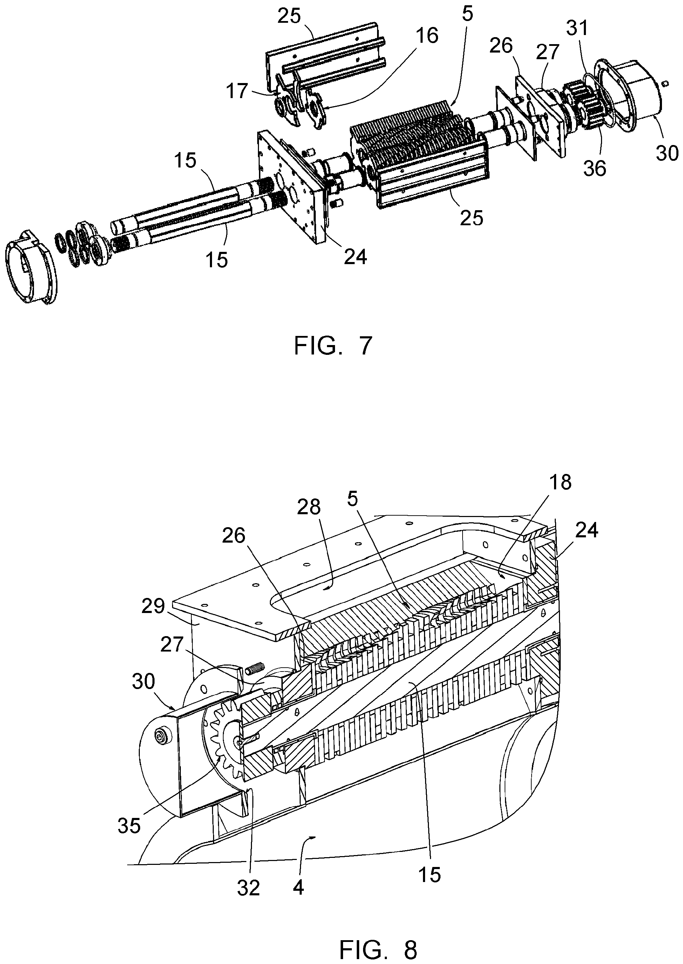

En référence à cette figure 9, il apparaît que les arbres 15 ont une section hexagonale et que chaque couteau 16 présente une ouverture centrale formée par la superposition de deux lumières hexagonales, décalées de 30° l'une par rapport à l'autre, les dimensions de ces lumières étant telles qu'elles permettent l'engagement ajusté, et le calage, des couteaux 16 sur les arbres 15. Comme cela est visible particulièrement sur la figure 8, les couteaux 16 successifs d'une même série sont décalés de 30 degrés, d'un couteau à un couteau adjacent dans la même série.

Chaque couteau 16 présente cinq dents saillantes, formant des arêtes tranchantes.

Chaque contre-couteau 17 est engagé sur l'arbre 15 correspondant et comprend une ouverture circulaire dans laquelle est logée une bague de glissement 20 à ouverture hexagonale et périphérie circulaire, cette bague de glissement 20 étant montée sur l'arbre 15. Le contre-couteau 17 n'est ainsi pas mobile dans le compartiment 18 lorsque l'arbre 15 correspondant est entraîné en rotation.

Du côté opposé au contre-couteau 17 par rapport au couteau 16, le broyeur 5 présente un contre-couteau complémentaire 19.

Le contre-couteau 17 présente un bord en arc de cercle tourné vers le couteau 16 associé, le long duquel défilent les dents que comprend ce couteau 16, et présente une entaille 21 aménagée en lui, débouchant dans ce bord en arc de cercle, et située sur le côté aval du broyeur 5 par rapport au sens de passage des déchets entre les séries de couteaux 16 et contre-couteaux 17. Cette entaille 21 forme ainsi une pointe 22 dirigée du côté amont du contre-couteau 17.

Le contre-couteau 17 comprend également une alvéole 23 débouchant dans les deux faces du contre-couteau 17 tournées vers les couteaux 16 qui sont adjacents à ce contre-couteau 17 dans la même série de couteaux et de contre-couteaux. Cette alvéole 23 est remplie de graisse de lubrification et forme ainsi une réserve de graisse, comme explicité plus loin.

Le contre-couteau 19 présente également un bord en arc de cercle tourné vers le couteau 16 associé, le long duquel défilent les dents que comprend ce couteau 16. Il est fixé sur une paroi 25 délimitant latéralement le compartiment de broyage 18.

En référence aux figures 5 à 8, il apparaît que ce compartiment 18 est délimité par une paroi antérieure 24, deux parois latérales 25 et une paroi postérieure 26 comportant un bossage distal 27. A l'état assemblé, l'ensemble forme un tiroir qui prend place dans un compartiment de réception 28 ayant des dimensions ajustées à celle de ce tiroir, les parois délimitant ce compartiment de réception 28 formant corps avec la cuve 4. Ce compartiment de réception 28 est notamment délimité par une paroi postérieure 29 qui comprend une ouverture apte à recevoir le bossage 27 de manière ajustée en position de complet engagement du tiroir, et qui comprend également une série de tiges filetées fixées à elle autour de cette ouverture.

La machine 1 comprend également un capot 30 et un joint 31.

Le capot 30 est dimensionné pour envelopper le bossage 27 de manière ajustée et est pourvu d'une bride destinée à être engagée sur les tiges filetées solidaire de la paroi 29 et à être boulonnée à cette dernière. Comme le montre particulièrement la figure 11, cette bride présente, au niveau de son bord interne, une surface biseautée 32.

Le joint 31 est en anneau et est dimensionné pour être engagé de manière ajustée autour du bossage 27 jusqu'à être au contact de ladite paroi postérieure 29. Lorsque le capot 30 est boulonné à cette dernière, la surface biseautée 32 vient écraser ce joint 31 sur l'ensemble de sa périphérie, comme visible plus particulièrement sur la figure 11.

L'ensemble d'actionnement du broyeur 5 inclut un moteur 35 agissant sur l'un des arbres 15, et deux pinions 36, calés sur les arbres 15 et engrenant l'un avec l'autre de telle sorte que l'entraînement d'un arbre 15 généré par le moteur 35 se transmette à l'autre arbre 15.

La cuve 4, quant à elle, présente une ouverture longitudinale 40 par laquelle les déchets broyés peuvent être retirés d'elle. Cette ouverture 40 est fermée par un couvercle coulissant 41, mobile entre une position de clôture étanche de cette ouverture et une position d'effacement, dans laquelle ce couvercle 41 libère complètement cette ouverture.

Comme cela se comprend, la plaque 10 permet, par son déplacement, de pousser l'ensemble des déchets vers le compartiment de broyage 18, sans nécessité d'actionnement répété par un opérateur comme avec un manche selon la technique antérieure. L'interstice que forme cette plaque 10 avec les parois du réceptacle 2 élimine, conjointement à l'étanchéité rendu possible par le joint 7, tout risque que des déchets, ou des fragments de déchets, remontent du broyeur 5 et passent au-dessus de cette plaque 10, ni que de tels déchets ou fragments ne s'accumulent dans un siège creux. Les ciseaux 12 permettent de parfaitement guider la plaque 10 entre ses positions de retrait et de fin de course, prévenant tout risque de coincement de cette plaque dans ce réceptacle.

La plaque 10 et le joint 7 permettent en outre de séparer momentanément le réceptacle 2 et le compartiment de broyage 18, pour la réalisation d'une désinfection et d'une stérilisation du compartiment de broyage 18 à des conditions non requises pour le réceptacle 2. Les verrous 14 immobilisent la plaque 10 dans cette position de fin de course, ce qui protège le joint 7 contre les efforts d'usure générés par cette désinfection et stérilisation.

Le montage du broyeur 5 dans la machine 1 est réalisé en engageant le tiroir qui contient ce broyeur dans le compartiment de réception 28, jusqu'à engagement ajusté du bossage 27 au travers de l'ouverture de passage aménagée dans la paroi postérieure 29. Le joint 31 est ensuite mis en place autour de ce bossage 27 jusqu'à être en contact de cette paroi postérieure 29, puis le capot 30 est mis en place de manière ajustée sur le bossage 27 et est boulonné à la paroi 29 de manière à réaliser l'écrasement du joint 31 par la paroi biseautée 32.

Deux structures sont ainsi prévues autour du broyeur 5, ledit tiroir 25 et ledit compartiment de réception 28, et l'écrasement du joint 31 sur l'ensemble de sa périphérie, par le capot 30, permet de réaliser une liaison distale très résistante et isostatique de ce tiroir à ce compartiment de réception. Cette liaison est apte à parfaitement résister aux efforts répétés subis par le broyeur 5, tout en permettant un démontage facile du broyeur, par simple démontage du capot 30 et retrait du joint 31 d'autour du bossage 27.

Chaque alvéole 23 permet un rechargement de l'interface entre un contre-couteau 17 et les deux couteaux 16 adjacents lorsqu'une série de cycles de stérilisation et de désinfection mettant en oeuvre de la vapeur d'eau, tend à réduire voire à faire disparaître la quantité de graisse présente dans ces interfaces. Il en résulte que les interruptions de l'utilisation de la machine 1 pour recharger les interfaces des couteaux 16 et contre-couteaux 17 en graisse peuvent être nettement espacées.

Par ailleurs, la pointe 22 constitue une zone d'accrochage d'un fragment de déchet présent entre un couteau 16 et un contre-couteau 17 et permet de retenir ce fragment jusqu'au passage de la dent consécutive du couteau 16 en regard de cette pointe 22, ce qui permet de réaliser un cisaillage ou un déchiquetage supplémentaire de ce fragment. L'efficacité du broyage obtenu est grandement améliorée et permet d'éliminer toute nécessité d'un tamisage en aval du broyeur 5.

Comme cela apparaît de ce qui précède, l'invention fournit une machine 1 présentant des avantages déterminants, précités, par rapport aux machines homologues de la technique antérieure.

Il va de soi que l'invention n'est pas limitée à la forme de réalisation décrite ci-dessus à titre d'exemple mais qu'elle s'étend à toutes les formes de réalisation couvertes par les revendications ci-annexées.

## Revendications

1. Machine (1) de traitement de déchets infectieux, notamment médicaux, comprenant un réceptacle (2) de chargement des déchets, un ensemble (3) de broyage de ces déchets, incluant un broyeur (5), et un moyen de poussée (10) permettant de pousser les déchets en direction de ce broyeur (5) ;
- le réceptacle (2) de chargement des déchets présente une section transversale constante entre une ouverture de chargement des déchets et une ouverture de communication avec le broyeur ;
- ledit moyen de poussée est une plaque (10) mobile en translation dans le réceptacle (2) de chargement des déchets, parallèlement à l'axe selon lequel ce réceptacle (2) présente ladite section transversale constante, cette plaque (10) ayant des dimensions telles qu'il existe seulement un interstice entre la tranche de la plaque (10) et les parois délimitant ledit réceptacle (2) de chargement des déchets ; la plaque (10) est mobile entre une position de retrait, dans laquelle elle est apte à être dégagée de ladite ouverture de chargement des déchets, et une position de fin de course, dans laquelle elle est située aux abords de ladite ouverture de communication ;
**caractérisée en ce qu'**elle comprend un joint d'étanchéité (7) mobile entre une position rétractée, dans laquelle ce joint ne fait pas obstacle à la mobilité de la plaque (10) dans le réceptacle (2) de chargement des déchets, et une position d'étanchéité, dans laquelle ce joint réalise, dans ladite position de fin de course de la plaque (10), une étanchéité entre la plaque (10) et les parois de ce réceptacle (2).

2. Machine (1) selon la revendication 1, **caractérisée en ce que** le joint d'étanchéité (7) est gonflable, de sorte que le passage de ce joint de ladite position rétractée à ladite position d'étanchéité se fasse par gonflage de ce joint et qu'inversement, le passage de ce joint de ladite position d'étanchéité à ladite position rétractée se fasse par dégonflage de ce joint.

3. Machine (1) selon la revendication 1 ou la revendication 2, **caractérisée en ce que** le joint d'étanchéité (7) est logé dans un siège aménagé dans la tranche de ladite plaque (10) et vient alors s'appliquer, dans ladite position d'étanchéité, sur les parois délimitant le réceptacle (2) de chargement des déchets.

4. Machine (1) selon l'une des revendications 1 à 3, **caractérisée en ce qu'**elle comprend des moyens de blocage de la plaque (10) dans ladite position de fin de course, notamment sous la forme d'au moins un verrou (14) mettant en engagement la plaque (10) et au moins une des parois délimitant ledit réceptacle (2) de chargement des déchets.

5. Machine (1) selon l'une des revendications 1 à 4, **caractérisée en ce que**, dans ladite position de retrait, la plaque (10) est entièrement logée dans un couvercle (11) que comprend la machine (1), ce couvercle étant mobile entre une position de recouvrement de ladite ouverture de chargement des déchets, dans laquelle il clos cette ouverture, et une position d'effacement, dans laquelle il ne fait pas obstacle au chargement des déchets dans ledit réceptacle (2).

6. Machine (1) selon l'une des revendications 1 à 5, **caractérisée en ce que** les moyens d'actionnement de la plaque (10) comprennent au moins deux séries de ciseaux (12) reliés les uns aux autres, sur deux côtés opposés de la plaque (10).

## Patentansprüche

1. Maschine (1) zur Behandlung von infektiösem Abfall, insbesondere medizinischem Abfall, die einen Behälter (2) zum Laden des Abfalls, eine Baugruppe (3) zur Zerkleinerung dieses Abfalls, die einen Zerkleinerer (5) umfasst, und ein Schiebeelement (10) umfasst, die das Schieben des Abfalls in Richtung dieses Zerkleinerers (5) ermöglicht;
- der Behälter (2) zum Laden des Abfalls weist zwischen einer Öffnung zum Laden des Abfalls und einer Verbindungsöffnung mit dem Zerkleinerer einen gleichbleibenden Querschnitt auf;
- das Schiebemittel ist eine Platte (10), die in dem Behälter (2) zum Laden des Abfalls parallel zu der Achse, in der dieser Behälter (2) den gleichbleibenden Querschnitt aufweist, translatorisch beweglich ist, wobei diese Platte (10) Abmessungen aufweist, die derart sind, dass nur ein Zwischenraum zwischen dem Abschnitt der Platte (10) und den Wänden vorhanden ist, die den Behälter (2) zum Laden des Abfalls abgrenzen; wobei die Platte (10) zwischen einer Rückzugsstellung, in der sie in der Lage ist, von der Öffnung zum Laden des Abfalls abgesetzt zu werden, und einer Endstellung beweglich ist, in der sie sich in der Umgebung der Verbindungsöffnung befindet;
**dadurch gekennzeichnet, dass** sie eine Dichtung (7) umfasst, die zwischen einer zurückgezogenen Stellung, in der diese Dichtung der Beweglichkeit der Platte (10) in dem Behälter (2) zum Laden des Abfalls nicht im Weg steht, und einer Dichtungsstellung beweglich ist, in der die Dichtung in der Endstellung der Platte (10) eine Dichtung zwischen der Platte (10) und den Wänden dieses Behälters (2) ausführt.

2. Maschine (1) nach Anspruch 1, **dadurch gekennzeichnet, dass** die Dichtung (7) aufblasbar ist, derart, dass der Übergang dieser Dichtung von der zurückgezogenen Stellung in die Dichtungsstellung durch Aufblasen dieser Dichtung erfolgt und umgekehrt der Übergang dieser Dichtung von der Dichtungsstellung in die zurückgezogene Stellung durch Ablassen der Luft aus dieser Dichtung erfolgt.

3. Maschine (1) nach Anspruch 1 oder Anspruch 2, **dadurch gekennzeichnet, dass** die Dichtung (7) in einem Sitz untergebracht ist, der in dem Abschnitt der Platte (10) eingerichtet ist, und dann in der Dichtungsstellung auf den Wänden aufliegt, die den Behälter (2) zum Laden des Abfalls abgrenzen.

4. Maschine (1) nach einem der Ansprüche 1 bis 3, **dadurch gekennzeichnet, dass** sie Mittel zum Sperren der Platte (10) in der Endstellung umfasst, insbesondere in der Form von mindestens einem Riegel (14), der die Platte (10) und mindestens eine der Wände, die den Behälter (2) zum Laden des Abfalls abgrenzen, in Eingriff bringt.

5. Maschine (1) nach einem der Ansprüche 1 bis 4, **dadurch gekennzeichnet, dass** die Platte (10) in der Rückzugsstellung vollständig in einem Deckel (11) untergebracht ist, den die Maschine (1) umfasst, wobei dieser Deckel zwischen einer Stellung zur Abdeckung der Öffnung zum Laden des Abfalls, in der er diese Öffnung verschließt, und einer zurückgenommenen Stellung beweglich ist, in der er dem Laden des Abfalls in den Behälter (2) nicht im Weg steht.

6. Maschine (1) nach einem der Ansprüche 1 bis 5, **dadurch gekennzeichnet, dass** die Mittel zur Betätigung der Platte (10) mindestens zwei Reihen von Scheren (12), die miteinander verbunden sind, auf zwei gegenüberliegenden Seiten der Platte (10) umfassen.

## Claims

1. Machine (1) for treating infectious waste, in particular medical waste, comprising a receptacle (2) for loading waste, a shredding assembly (3) for shredding said waste, including a shredder (5), and a pushing means (10) making it possible to push the waste toward this shredder (5);
- the receptacle (2) for loading waste has a constant cross-section between a waste loading opening and a communication opening with the shredder; and
- said pushing means (10) is a plate translatable in the waste loading receptacle (2), parallel to the axis along which this receptacle (2) has said constant cross-section, this plate (10) having dimensions such that only an interstice exists between the edge wall of the plate (10) and the walls defining said waste loading receptacle (2); the plate (10) is movable between a withdrawn position, in which it is able to be freed from said waste loading opening, and an end-of-travel position, in which it is situated near said communication opening;
**characterized in that** the machine comprises a sealing gasket (7) movable between a retracted position, in which this sealing gasket (7) does not hinder the mobility of the plate (10) in the waste loading receptacle, and a sealing position, in which the sealing gasket (7) produces, in said end-of-travel position of the plate (10), sealing between the plate (10) and the walls of said receptacle (2).

2. Machine (1) according to claim 1, **characterized in that** the sealing gasket (7) is inflatable, such that the passage of this sealing gasket (7) from said retracted position to said sealing position is done by inflating this sealing gasket (7), and, conversely, the passage of this sealing gasket (7) from said sealing position to said retracting position is done by deflating this sealing gasket (7).

3. Machine (1) according to claim 1 or claim 2, **characterized in that** the sealing gasket (7) is housed in a seat arranged in the edge wall of said plate (10) and then presses, in said sealing position, on the walls defining the waste loading receptacle (2).

4. Machine (1) according to anyone of claims 1-3, **characterized in that** the machine comprises means for blocking the plate (10) in said end-of-travel position, in particular in the form of at least one latch (14) engaging the plate (10) and at least one of the walls defining said waste loading receptacle (2).

5. Machine (1) according to anyone of claims 1-4, **characterized in that**, in said withdrawn position, the plate (10) is completely housed in a cover (11) comprised by the machine (1), this cover being movable between a position covering said waste loading opening, in which it closes that opening, and a retracted position, in which it does not hinder the loading of waste in said receptacle (2).

6. Machine (1) according to anyone of claims 1-5, **characterized in that** the means for actuating the plate comprise at least two series of crossed-bars (12) pivotally connected to one another, on two opposite sides of the plate (10).
